# EUROPEAN PATENT SPECIFICATION

(11) **EP 3 483 691 B1**
(45) Date of publication and mention of the grant of the patent: **05.01.2022**
(21) Application number: 18204926.2
(22) Date of filing: 07.11.2018
(51) Int. Cl.: G05D 16/00, G05D 16/16, G05D 16/06

(54) **PRESSURE CONTROLLED VALVE**
DRUCKGESTEUERTES VENTIL
VANNE CONTRÔLÉE PAR PRESSION

(30) Priority: 10.11.2017 DK PA201700633
(43) Date of publication of application: 15.05.2019
(73) Proprietor: Danfoss A/S, 6430 Nordborg (DK)
(72) Inventor: Gustincic, Matjaz, 6430 Nordborg (DK); Zagar, Tomaz, 6430 Nordborg (DK)
(74) Representative: Inspicos P/S

(56) References cited:
- WO-A1-2006/136158
- WO-A1-2009/006893
- US-A- 5 971 012
- US-A1- 2015 308 579

## Description

### FIELD OF THE INVENTION

The present invention relates to a pressure controlled valve comprising at least one fluid inlet and at least one fluid outlet, a pressure responsive valve seat, a pressure responsive valve element arranged movably with respect to the pressure responsive valve seat, a diaphragm which controls the position of the pressure responsive valve element with respect to the pressure responsive valve seat, a biasing element configured to bias the pressure responsive valve element in a direction away from the pressure responsive valve seat, and an insert element interconnecting the pressure responsive valve seat and the biasing element contributing to a tension of the biasing element. In the valve according to the invention, the insert element is arranged at least partly in a flow path through the pressure controlled valve. Further the insert element is provided with one or more openings allowing a fluid flow to pass through the insert element.

### BACKGROUND OF THE INVENTION

To protect building's fluid installations against differential pressure variations that arise in e.g., a district heating distribution network, pressure controlled valves need to be installed.

US 2015/0308579 A1 discloses a pressure independent control valve. A hollow piston is movably arranged in a seat of the valve. The valve comprises a chamber which is in fluid communication with a valve inlet and the hollow piston, and a biasing member configured to urge the hollow piston towards the chamber. A head compresses the biasing member via a telescopic stem, as the stem is connected to the head at one end and to an adjusting bolt at another end.

WO 2009/006893 A1 discloses a control valve for use in liquid-borne systems. The valve comprises a differential pressure regulator which includes a cup-shaped valve element being movable relative to a valve seat, the valve element being biased in a direction away from the valve seat by means of a compressible spring. The movable valve element and the spring are accommodated inside a housing which is arranged partly in the flow path, and which is provided with openings allowing a fluid to pass there through.

US 5,971,012 discloses a valve comprising a piston with a sleeve being arranged movably relative to a cover arranged over an outlet of the valve. A spring is arranged between the cover and the piston and biases the piston away from the cover. A number of cover openings are formed in the cover, and the position of the sleeve relative to the cover openings defines a flow area through the openings, and thereby the opening degree of the valve.

### DESCRIPTION OF THE INVENTION

It is an object of embodiments of the invention to provide a pressure controlled valve in which the biasing element is positioned outside of the fluid flow path so that the flow is not disturbed by the biasing element.

It is a further object of embodiments of the invention to provide a pressure controlled valve in which a biasing element can be tensioned and stabilized without disturbing the fluid flow through the valve.

The invention provides a pressure controlled valve according to claim 1.

Thus, the invention provides a pressure controlled valve for use in systems where a pressure difference between two points in the system needs to be controlled. For instance, pressure controlled valves can be installed in district heating systems at the connection point between a central heating system and a consumer buildings. The pressure controlled valves would ensure control of pressure difference between the central heating and/or cooling system and the consumer buildings' heating and/or cooling system. In the present context the term 'pressure controlled valve' should be interpreted to mean a valve which is capable of controlling and maintaining a differential pressure across the valve regardless of changes in pressure conditions in the system, such as changes in the inlet and/or outlet pressure. By controlling and maintaining the differential pressure across the flow control valve, a flow rate of fluid through the valve is therefore controlled and maintained.

The valve comprises at least one fluid inlet and at least one fluid outlet. During operation, fluid enters the valve via an inlet, flows through the interior of the valve, and leaves the valve via the outlet. The at least one fluid inlet, allowing a fluid to enter the valve, may typically be connected to a point of a heating system where the pressure can be changed. The at least one fluid inlet is in fluid communication with the at least one outlet connected to a point with another pressure, allowing the fluid to exit the valve.

The pressure responsive valve seat is to be understood as a traditional valve seat, forming part of the pressure responsive part of the valve, e.g. having a circular shape and representing a fixed part of the valve positioned inside the valve and between the inlet and outlet.

The pressure responsive valve element, also forming part of the pressure responsive part of the valve, is mounted in such a manner that it is movable relative to the pressure responsive valve seat, i.e., it can be moved towards and away from the pressure responsive valve seat, changing a flow rate and thereby pressure drop. A portion of the pressure responsive valve element closer to the pressure responsive valve seat may have a shape which corresponds to the shape of the pressure responsive valve seat such that it can enter or abut the pressure responsive valve seat. The relative position of the pressure responsive valve element with respect to the pressure responsive valve seat defines the first opening degree of the pressure controlled valve, i.e. the opening degree associated with the pressure responsive part of the valve. The first opening degree determines the fluid flow between the inlet and outlet, i.e. the fluid flow across the valve. By moving the pressure responsive valve element towards the pressure responsive valve seat, the opening degree decreases reducing the fluid flow through the valve. When the pressure responsive valve element enters or abuts the pressure responsive valve element, the valve is closed and the flow of fluid through the valve is prevented. Similarly, moving the pressure responsive valve element away from the pressure responsive valve seat results in an increase in the first opening degree, and thereby in an increase in the fluid flow through the valve.

The diaphragm of the pressure controlled valve is made of a flexible material so that it deflects as a response to a difference between the first and second pressure which the two sides of the diaphragm are subjected to, i.e., it deflects in response to pressure difference at its opposing sides. The first and second pressures may, for instance, be pressures at an inlet and outlet, respectively. In another example, the first pressure may be at an inlet (outlet) and the second pressure may be at a point inside the valve, which reflects the outlet (inlet) pressure in a certain way. As another example, the first and second pressures may correspond to pressure levels in other parts of the fluid flow system.

The diaphragm is connected with the pressure responsive valve element and thereby deflections of the diaphragm determine the position of the pressure responsive valve element with respect to the pressure responsive valve seat. The first side of the diaphragm is exposed to the first pressure, i.e., pressure to which the pressure responsive valve element is exposed. The second side of the diaphragm is opposite to the first side and is exposed to a second pressure. When the second pressure is for instance higher than the first pressure, the diaphragm will deflect in a direction of the pressure responsive valve element forcing it towards the pressure responsive valve seat. Further, when there is a change in the pressure difference the diaphragm will deflect in response to the change, what will further cause a movement of the pressure responsive valve element. In the case that the pressure difference between the first pressure and the second pressure increases, the pressure responsive valve element is moved towards the pressure responsive valve seat, reducing the opening degree.

Similarly, in the case that the pressure difference between the first pressure and the second pressure decreases, the pressure responsive valve element is moved away from the pressure responsive valve seat, increasing the opening degree.

The valve further comprises a biasing element which urges the pressure responsive valve element in a direction away from the pressure responsive valve seat so that the valve can stay in the open state. The biasing element works together with the diaphragm controlling the position of the pressure responsive valve element with respect to the pressure responsive valve seat. The biasing element, i.e. its biasing constant and size, defines a maximum pressure difference between the first and the second pressure, therefore defining a capacity of the valve. The biasing element may be connected to the pressure responsive valve element and/or to the diaphragm.

The insert element interconnects the pressure responsive valve seat and the biasing element. It may be in the form of a rigid element abutting the pressure responsive valve seat on one end and attached to the biasing element on the other end. In other words, it is squeezed between the biasing element and the pressure responsive valve seat, contributing to a tension of the biasing element. Thus, the insert element pushes the biasing element out of the flow path through the valve, thereby ensuring that the biasing element does not disturb the fluid flow through the valve.

The part of the biasing element attached to the insert element may surround a part of the insert element so that a firm engagement between the insert and biasing element is achieved. Such an attachment further contributes to stability of the biasing element. As it can be understood from the above description, the insert element is at least partly arranged in a flow path through the pressure controlled valve, as it is positioned by the pressure responsive valve seat which is further positioned between the inlet and outlet. The insert element is provided with one or more openings allowing a fluid flow to pass through the insert element and continues towards one of the outlets.

The purpose of the insert element is to tension the biasing element. This tension of the biasing element contributes to the sensitivity of the valve. This allows a use of a biasing element having a relatively small size and having a low intrinsic biasing constant. Furthermore, as the insert element is attached to one end of the biasing element, the biasing element is stabilized as the other end of the insert element abuts the pressure responsive valve seat which is a fixed part of the valve. The stability of the biasing element plays an important role in the valve operation. Namely, when the biasing element is stable, a high sensitivity of the valve is ensured and the valve is capable to automatically change its opening degree in a response to a rather small pressure difference. The insert element also distances the biasing element from the flow path through the valve, as it is positioned directly in the flow path. This is an advantage as, in such a configuration, the fluid flow is not disturbed by the biasing element. Additionally, as the insert element is provided with openings, the flow through the valve is not affected by the insert element. The flow is rather guided through the insert element via its openings. It is important to note that all of the above functions and advantages are achieved with a single insert element featuring one or more openings. In the so far known valves these features are either absent or achieved with a plurality of elements.

In one embodiment of the present invention, one or more openings of the insert element may be provided at a portion of the insert element abutting the pressure responsive valve seat and on the side of the insert element. One or more openings provided at the portion abutting the pressure responsive valve seat allow the fluid flow to enter the insert element while one or more openings on the side allow the fluid flow to exit the insert element. Naturally, the fluid flow may enter through the openings on the side and exit through the openings at the portion abutting the pressure responsive valve seat. The openings therefore allow the fluid flow to pass through the insert element and thus the valve.

The portion of the insert element abutting the biasing element may be closed, preventing the fluid flow to pass towards the biasing element. In this way, the biasing element is not directly exposed to the fluid flow which may affect the flow through the valve. Thereby, the fluid flow is not disturbed by the biasing element which on the other hand may cause turbulences. Furthermore, this portion of the insert element is formed such that the biasing element surrounds it, thus stabilizing the entire insert element.

The insert element may be exchangeable, such that a new insert element can be introduced. Different insert elements may have different size, i.e., height and width, different number of openings, opening of a different size and shape, and the like. By having such an exchangeable element in the valve, a number of pressure controlled valves can be produced having a different capacity and maximum differential pressure, using identical valve housings and other essential parts of the valve, and simply by selecting a suitable insert element. This reduces the number of different valve parts required at the manufacturer, and thereby reduces the manufacturing costs.

The tension of the biasing element may partly be defined by the height of the insert element, and the distance between the pressure responsive valve seat and the biasing element may be defined by the height of the insert element. The tension of the biasing element is its inherent characteristic which may further be corrected by the height of the insert element. The height of the insert element defines a distance between the pressure responsive valve seat and the biasing element, and furthermore sets biasing to the biasing element. The height of the insert element can be chosen with respect to the desired valve capacity and desired maximum differential pressure set by the valve.

In one embodiment of the invention the biasing element may define a maximum pressure difference between the first and the second pressure, i.e., maximum differential pressure that can be set by the valve.

The biasing element of the valve may be or comprise at least one spring. The spring may, e.g., be a compressible spring or a torsion spring. Alternatively, the biasing element may be or comprise other suitable devices which are capable of biasing or urging the pressure responsive valve element towards or away from the pressure responsive valve seat.

The pressure responsive valve element may be cup-shaped. In the present context, the term "cup-shaped" is to be interpreted to mean that the pressure responsive valve element has a bottom and side walls defining a free edge, so that the cup-shaped element allows an object to be accommodated inside it. In this case, the biasing element may be accommodated inside the pressure responsive valve element. Further, the width of the pressure responsive valve element may gradually decrease from the end closer to the pressure responsive valve seat towards the end where the diaphragm is attached. This shape may provide further protection of the biasing element as the volume is decreased around it and a smaller amount of fluid can be found around the biasing element.

In the case that the pressure responsive valve element is cup-shaped, the first opening degree of the valve may be determined by a distance between a free edge of the cup-shaped valve element and the pressure responsive valve seat.

The insert element may at least partly be positioned inside the pressure responsive valve element. As the insert element is positioned inside the pressure responsive valve element, the biasing element will be pushed completely out of the flow path through the valve. Furthermore, the biasing element positioned inside the pressure responsive valve element may not be of the same height as the pressure responsive valve element. This leaves space for the insert element to occupy the portion of the pressure responsive valve element closer to the pressure responsive valve seat. The bigger the portion of the insert element inside the pressure responsive valve element is, the more the biasing element is protected from the direct fluid flow.

The pressure controlled valve may further comprise a flow control part which comprises
- a flow control valve seat;
- at least one channel connecting the at least one fluid inlet and the at least one fluid outlet;
- a piston, and
- a flow control valve element arranged movably with respect to the flow control valve seat, the position of the flow control valve element with respect to the flow control valve seat defining a second opening degree of the flow control part of the pressure controlled valve.

The flow control valve seat may be arranged next to the pressure responsive valve seat and further away from the biasing element and insert element. The flow control valve element may be arranged on the side of the flow control valve seat opposite from the pressure responsive valve seat. The flow control valve seat and the flow control valve element are arranged in a similar manner as the pressure responsive valve seat and the pressure responsive valve element, and define a flow control part of the valve. The flow control valve element is operated by the piston which changes the position of the flow control valve element with respect to the flow control valve seat, thereby changing the fluid flow through the valve. Namely, the fluid flow through this part of the valve is determined by the second opening degree defined by the relative position between the flow control valve element and the flow control valve seat, while the flow rate through the entire pressure controlled valve is determined by a combination of the first opening degree and the second opening degree. The piston may be operated by an actuator, such as an electrical actuator. Alternatively, the piston may be operated manually, e.g. the piston may be set manually to a certain opening position.

The valve may further comprise a pressure conduit having a first and second end, the first end being in pressure communication with the at least one fluid inlet or with the at least one fluid outlet, and the second end of the conduit being in pressure communication with the second side of the diaphragm. If the first end of the conduit is connected to one of the inlets, the second side of the diaphragm is exposed to the pressure at the one of the inlets. Similarly, when the first end of the conduit is connected to one of the outlets the second side of the diaphragm is exposed to the pressure at the one of the outlets. Namely, the pressure at the one of the inlets (outlets) is reflected onto the second side of the diaphragm through the pressure conduit.

The first side of the diaphragm may be connected to the at least one fluid outlet in the case that the pressure conduit is connected to the at least one fluid inlet. In this case, the first side of the diaphragm is in fluid communication with the one of the outlets via the insert element and pressure responsive valve element, and therefore the pressure from the one of the outlets is reflected to the first side of the diaphragm. The pressure difference acting on the diaphragm is a difference between pressures at the one of the outlets and one of the inlets. If, for instance, the pressure at the one of the outlets is higher than the one at the one of the inlets, the diaphragm will deflect in the direction away from the pressure responsive valve seat, increasing the first opening degree of the valve. In another case, the first side of the diaphragm may be connected to the at least one fluid inlet when the conduit is connected to the at least one fluid outlet. Here, the first side of the diaphragm is in fluid communication with one of the inlets, again via the insert element and pressure responsive valve element, and therefore the pressure from the one of the inlets is reflected to the first side of the diaphragm. The pressure difference acting on the diaphragm is a difference between pressures at the one of the inlets and one of the outlets. Here, if the pressure at the one of the outlets is higher than the one at the one of the inlets, the diaphragm will deflect in the direction towards the pressure responsive valve seat, decreasing the first opening degree of the valve. Thus, according to this embodiment, the pressure difference controlling the deflection of the diaphragm, and thereby the position of the pressure responsive valve element relative to the pressure responsive valve seat, is the pressure difference across the valve.

### BRIEF DESCRIPTION OF THE DRAWINGS

The invention will now be described in further detail with reference to the accompanying drawings in which
Fig. 1 is a cross sectional view of a pressure controlled valve according to an embodiment of the invention,
Fig. 2a is a perspective view of an insert element for use in a pressure controlled valve according to an embodiment of the invention, and
Fig. 2b is a top view of the insert element of Fig. 2a.

### DETAILED DESCRIPTION OF THE DRAWINGS

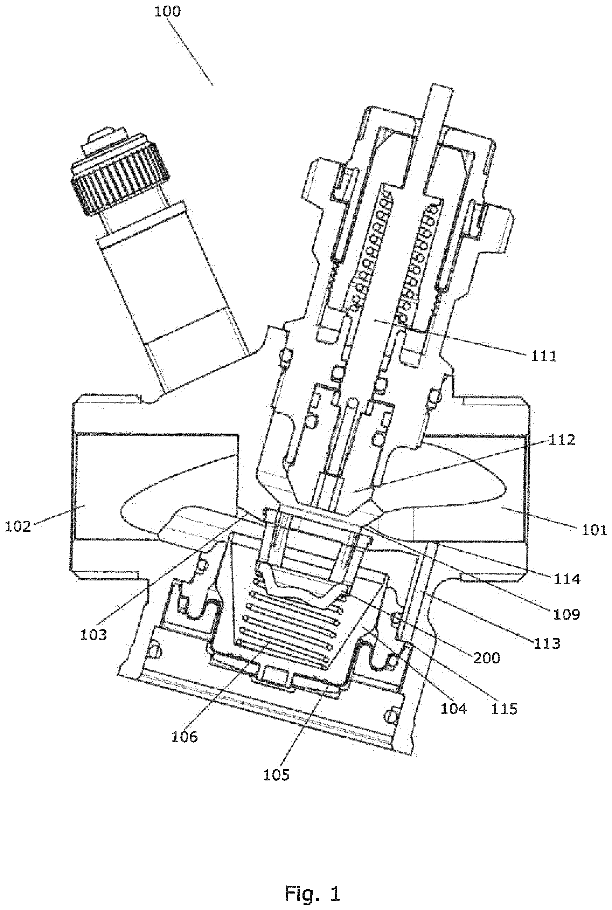

Fig. 1 is a cross sectional view of a pressure controlled valve 100 according to an embodiment of the invention. The pressure controlled valve 100 shown in Fig. 1 comprises one fluid inlet 101 and one fluid outlet 102, a pressure responsive valve seat 103, a pressure responsive valve element 104, a diaphragm 105, a biasing element 106, and an insert element 200.

The pressure responsive valve element 104 is arranged movably with respect to the pressure responsive valve seat 103. The position of the pressure responsive valve element 104 with respect to the pressure responsive valve seat 103 defines a first opening degree of the pressure controlled valve 100.

The diaphragm 105 has a first side (top) and a second side (lower). The first side of the diaphragm 105 is in contact with the pressure responsive valve element 104 and is exposed to a first pressure P₁. The second side of the diaphragm 105 is exposed to a second pressure P₂. The diaphragm 105 is configured to deflect in response to variations in a pressure difference between the first (P₁) and second (P₂) pressure and thereby control the position of the pressure responsive valve element 104 with respect to the pressure responsive valve seat 103.

The biasing element 106 is configured to bias the pressure responsive valve element 104 in a direction away from the pressure responsive valve seat 103.

The insert element 200 interconnects the pressure responsive valve seat 103 and the biasing element 106, thereby contributing to a tension of the biasing element 106. The insert element 200 is provided with a number of openings allowing a fluid flow to pass through the insert element 200. The biasing element 106 is pushed out of the flow path by the insert element 200, as the insert element 200 is arranged in the flow path, and is designed to have one or more openings so that the flow can pass there through essentially uninhibited. By having such an insert element 200, a pressure controlled valve 100 can be provided with the biasing element 106 and pressure responsive valve element 104, without a flow disturbing element in the flow path.

The insert element 200 has a number of functions: it distances the biasing element 106 away from the fluid flow path; it additionally biases the biasing element 106; and it stabilizes the biasing element 106. As a result of such insert element 200 the fluid flow is not disturbed by the biasing element 106, the stable biasing element 106 results in a high sensitivity of the valve 100 being capable of reacting to a rather small pressure difference.

The pressure controlled valve 100 further comprises a flow control part which comprises a flow control valve seat 109, one channel connecting the inlet 101 and the outlet 102, a piston 111, and a flow control valve element 112. The flow control valve element 112 is arranged movably with respect to the flow control valve seat 109. The position of the flow control valve element 112 with respect to the flow control valve seat 109 defines a second opening degree of the flow control part of the pressure controlled valve 100.

The pressure controlled valve 100 is further provided with a pressure conduit 113. The pressure conduit 113 has a first end 114 and a second end 115. The first end 114 of the pressure conduit 113 is in pressure communication with the inlet 101 therefore the pressure from the inlet 101 is reflected through the conduit 113 to the second side of the diaphragm 105 as the second end 115 of the pressure conduit 113 is in pressure communication with the second side of the diaphragm 105. The first side of the diaphragm 105 is exposed to the pressure at the outlet 102 via the insert element 200 and first valve element 104. The pressure difference acting on the diaphragm 105 is therefore a difference between pressures at the outlet 102 and inlet 101. If, for instance, the pressure at the outlet 102 is higher than the one at the inlet 101, the diaphragm 105 will deflect in the direction away from the pressure responsive valve seat 103, increasing the first opening degree of the valve 100

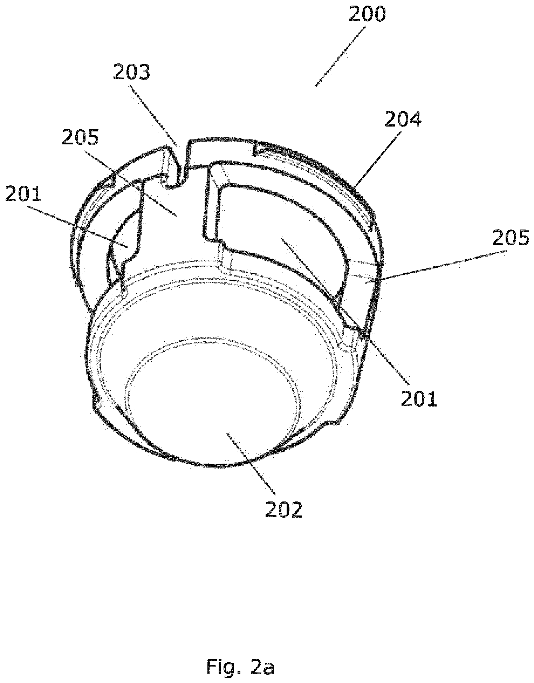

Fig. 2a is a perspective view of an insert element 200 for use in a pressure controlled valve according to an embodiment of the invention. The insert of Fig. 2a could, e.g., be used in the valve illustrated in Fig. 1. In this view, two side openings 201 can be seen. The openings are separated by ribs 205. These two openings 201 on the side of the insert element 200 allow the fluid flow to exit the insert element 200. Portion 202 of the insert element 200, which is arranged to abut the biasing element 106, is closed, thereby preventing the fluid flow to pass towards the biasing element 106. In this way, the biasing element 106 is not directly exposed to the fluid flow, what is particularly important as it may cause turbulences. In this way the flow through the valve 100 is not affected and disturbed by the presence of the biasing element 106.

The portion 202 of the insert element 200 is formed such that the biasing element surrounds it, thus stabilizing the biasing element 106. Additionally, such an attachment between the insert element 200 and biasing element 106 contributes to the stability of the biasing element 106. Each rib 205 has a groove 203 which serves for easy insertion of the insert element 200 into a valve. Portion 204 of the insert element 200 is engaged to the pressure responsive valve seat.

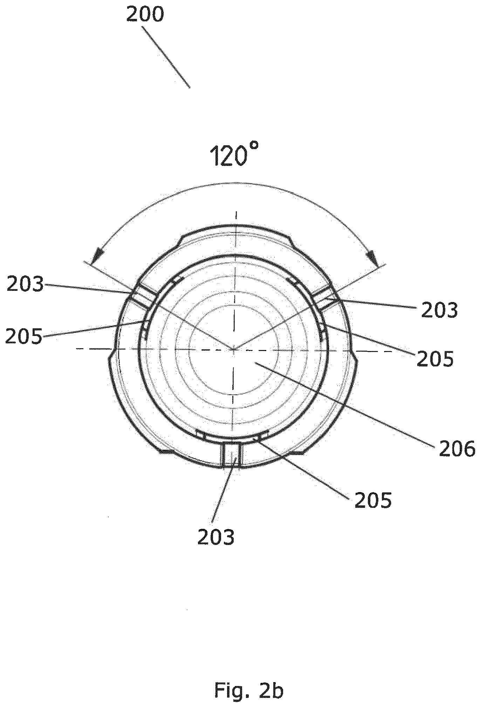

Fig. 2b is a top view of the insert element 200 of Fig. 2a having a substantially circular cross-section. The insert element 200 comprises three side openings (not shown), three ribs 205 and therefore three grooves 203 being separated by 120°and arranged symmetrically. In this view, a top opening 206 is shown. The top opening 206 allows the fluid flow to enter the insert element 200. The top opening 206 provided at the portion abutting the pressure responsive valve seat allows the fluid flow to enter the insert element 200 while the three side openings 201 on the side allow the fluid flow to exit the insert element 200. Depending on a position of the insert element 200 with respect to the pressure responsive valve seat, the fluid flow may enter through the side openings 201 and exit through the top opening 206 at the portion abutting the pressure responsive valve seat. The openings 201 and 206, therefore, allow the fluid flow to pass through the insert element 200 and thus the entire pressure controlled valve 100, essentially undisturbed.

## Claims

1. A pressure controlled valve (100) comprising:
- at least one fluid inlet (101) and at least one fluid outlet (102);
- a valve seat (103);
- a pressure responsive valve element (104) being arranged movably with respect to the valve seat (103), the position of the pressure responsive valve element (104) with respect to the valve seat (103) defining a first opening degree of the pressure controlled valve (100);
- a diaphragm (105) being connected with the pressure responsive valve element (104), and having a first side being exposed to a first pressure, and a second side being exposed to a second pressure, such that variations in a pressure difference between the first pressure and the second pressure induces a deflection of the diaphragm (105), thereby changing the position of the pressure responsive valve element (104) with respect to the valve seat (103); and
- a biasing element (106) being configured to bias the pressure responsive valve element (104) in a direction away from the valve seat (103); and
- an insert element (200) interconnecting the valve seat (103) and the biasing element (106), thereby contributing to a biasing of the biasing element (106), the insert element (200) being arranged at least partly in a flow path through the pressure controlled valve (100), so as to distance the biasing element (106) from the flow path, and the insert element (200) being provided with one or more openings (201, 206), the insert element (200) thereby being configure to allow a fluid flow to pass through the insert element (200),
**characterized in that** the portion of the insert element (200) abutting the biasing element (106) is closed, preventing the fluid flow to pass towards the biasing element (106), and **in that** the portion of the insert element (200) abutting the biasing element (106) is formed such that the biasing element (106) surrounds it.

2. A pressure controlled valve (100) according to claim 1, wherein one or more of the one or more openings (201, 206) of the insert element (200) are provided at a portion of the insert element (200) abutting the valve seat (103) and on the side of the insert element (200).

3. A pressure controlled valve (100) according to any of the preceding claims, wherein the insert element (200) is exchangeable, such that a new insert element (200) can be introduced.

4. A pressure controlled valve (100) according to any of the preceding claims, wherein a biasing of the biasing element (106) is partly defined by a height of the insert element (200), and wherein the distance between the valve seat (103) and the biasing element (106) is defined by the height of the insert element (200) .

5. A pressure controlled valve (100) according to any of the preceding claims, wherein the biasing element (106) defines a maximum pressure difference between the first and the second pressure.

6. A pressure controlled valve (100) according to any of the preceding claims, wherein the biasing element (106) is at least one spring.

7. A pressure controlled valve (100) according to any of the preceding claims, wherein the pressure responsive valve element (104) is cup-shaped.

8. A pressure controlled valve (100) according to any of the preceding claims, wherein the insert element (200) is at least partly positioned inside the pressure responsive valve element (104).

9. A pressure controlled valve (100) according to any of the preceding claims, the valve further comprising a flow control part, wherein the flow control part comprises
- a flow control valve seat;
- at least one channel connecting the at least one fluid inlet (101) and the at least one fluid outlet (102);
- a piston, and
- a flow control valve element arranged movably with respect to the flow control valve seat, the position of the flow control valve element with respect to the flow control valve seat defining a second opening degree of the flow control part of the pressure controlled valve (100).

10. A pressure controlled valve (100) according to any of the preceding claims, the valve further comprising a pressure conduit (113) having a first (114) and second (115) end, the first end (114) being in pressure communication with the at least one fluid inlet (101) or with the at least one fluid outlet (102), and the second end (115) of the conduit (113) being in pressure communication with the second side of the diaphragm (105).

11. A pressure controlled valve (100) according to claim 10, wherein the first side of the diaphragm (105) is connected to the at least one fluid outlet (102) in the case that the conduit (113) is connected to the at least one fluid inlet (101), and the first side of the diaphragm (105) is connected to the at least one fluid inlet (101) in the case that the conduit (113) is connected to the at least one fluid outlet (102).

## Patentansprüche

1. Druckgesteuertes Ventil (100), umfassend:
- wenigstens einen Fluideinlass (101) und wenigstens einen Fluidauslass (102);
- einen Ventilsitz (103);
- ein auf Druck ansprechendes Ventilelement (104), das in Bezug auf den Ventilsitz (103) beweglich angeordnet ist, wobei die Position des auf Druck ansprechenden Ventilelements (104) in Bezug auf den Ventilsitz (103) einen ersten Öffnungsgrad des druckgesteuerten Ventils (100) definiert;
- eine Membran (105), die mit dem auf Druck ansprechenden Ventilelement (104) verbunden ist und eine erste Seite, die einem ersten Druck ausgesetzt ist, und eine zweite Seite, die einem zweiten Druck ausgesetzt ist, aufweist, so dass Änderungen einer Druckdifferenz zwischen dem ersten Druck und dem zweiten Druck eine Auslenkung der Membran (105) hervorrufen, wodurch die Position des auf Druck ansprechenden Ventilelements (104) in Bezug auf den Ventilsitz (103) geändert wird; und
- ein Vorspannelement (106), das dafür ausgelegt ist, das auf Druck ansprechende Ventilelement (104) in einer Richtung weg vom Ventilsitz (103) vorzuspannen; und
- ein Einsatzelement (200), das den Ventilsitz (103) und das Vorspannelement (106) miteinander verbindet, wodurch es zu einem Vorspannen des Vorspannelements (106) beiträgt, wobei das Einsatzelement (200) wenigstens teilweise in einem Durchflussweg durch das druckgesteuerte Ventil (100) angeordnet ist, so dass es das Vorspannelement (106) von dem Durchflussweg auf Abstand hält, und wobei das Einsatzelement (200) mit einer oder mehreren Öffnungen (201, 206) versehen ist, wobei das Einsatzelement (200) dadurch dafür ausgelegt ist zu ermöglichen, dass ein Fluidstrom durch das Einsatzelement (200) strömt,
**dadurch gekennzeichnet, dass** der Abschnitt des Einsatzelements (200), der an dem Vorspannelement (106) anliegt, geschlossen ist, was verhindert, dass der Fluidstrom in Richtung des Vorspannelements (106) durchströmt, und dadurch, dass der Abschnitt des Einsatzelements (200), der an dem Vorspannelement (106) anliegt, derart ausgebildet ist, dass das Vorspannelement (106) ihn umgibt.

2. Druckgesteuertes Ventil (100) nach Anspruch 1, wobei eine oder mehrere der ein oder mehreren Öffnungen (201, 206) des Einsatzelements (200) an einem Abschnitt des Einsatzelements (200), der an dem Ventilsitz (103) anliegt, und auf der Seite des Einsatzelements (200) vorgesehen sind.

3. Druckgesteuertes Ventil (100) nach einem der vorhergehenden Ansprüche, wobei das Einsatzelement (200) auswechselbar ist, so dass ein neues Einsatzelement (200) eingeführt werden kann.

4. Druckgesteuertes Ventil (100) nach einem der vorhergehenden Ansprüche, wobei ein Vorspannen des Vorspannelements (106) teilweise durch eine Höhe des Einsatzelements (200) definiert ist und wobei der Abstand zwischen dem Ventilsitz (103) und dem Vorspannelement (106) durch die Höhe des Einsatzelements (200) definiert ist.

5. Druckgesteuertes Ventil (100) nach einem der vorhergehenden Ansprüche, wobei das Vorspannelement (106) eine maximale Druckdifferenz zwischen dem ersten und dem zweiten Druck definiert.

6. Druckgesteuertes Ventil (100) nach einem der vorhergehenden Ansprüche, wobei das Vorspannelement (106) wenigstens eine Feder ist.

7. Druckgesteuertes Ventil (100) nach einem der vorhergehenden Ansprüche, wobei das auf Druck ansprechende Ventilelement (104) schalenförmig ist.

8. Druckgesteuertes Ventil (100) nach einem der vorhergehenden Ansprüche, wobei das Einsatzelement (200) wenigstens teilweise innerhalb des auf Druck ansprechenden Ventilelements (104) positioniert ist.

9. Druckgesteuertes Ventil (100) nach einem der vorhergehenden Ansprüche, wobei das Ventil ferner einen Durchflusssteuerteil umfasst, wobei der Durchflusssteuerteil umfasst:
- einen Durchflusssteuerventilsitz;
- wenigstens einen Kanal, der den wenigstens einen Fluideinlass (101) und den wenigstens einen Fluidauslass (102) verbindet;
- einen Kolben, und
- ein Durchflusssteuerventilelement, das in Bezug auf den Durchflusssteuerventilsitz beweglich angeordnet ist, wobei die Position des Durchflusssteuerventilelements in Bezug auf den Durchflusssteuerventilsitz einen zweiten Öffnungsgrad des Durchflusssteuerteils des druckgesteuerten Ventils (100) definiert.

10. Druckgesteuertes Ventil (100) nach einem der vorhergehenden Ansprüche, wobei das Ventil ferner eine Druckleitung (113) mit einem ersten (114) und einem zweiten (115) Ende umfasst, wobei das erste Ende (114) mit dem wenigstens einen Fluideinlass (101) oder mit dem wenigstens einen Fluidauslass (102) in Druckverbindung steht und das zweite Ende (115) der Leitung (113) mit der zweiten Seite der Membran (105) in Druckverbindung steht.

11. Druckgesteuertes Ventil (100) nach Anspruch 10, wobei die erste Seite der Membran (105) mit dem wenigstens einen Fluidauslass (102) verbunden ist, falls die Leitung (113) mit dem wenigstens einen Fluideinlass (101) verbunden ist, und die erste Seite der Membran (105) mit dem wenigstens einen Fluideinlass (101) verbunden ist, falls die Leitung (113) mit dem wenigstens einen Fluidauslass (102) verbunden ist.

## Revendications

1. Soupape à régulation de pression (100) comprenant :
- au moins une entrée de fluide (101) et au moins une sortie de fluide (102) ;
- un siège de soupape (103) ;
- un élément de soupape sensible à la pression (104) disposé de façon mobile par rapport au siège de soupape (103), la position de l'élément de soupape sensible à la pression (104) par rapport au siège de soupape (103) définissant un premier degré d'ouverture de la soupape à régulation de pression (100) ;
- une membrane (105) reliée à l'élément de soupape sensible à la pression (104) et présentant un premier côté exposé à une première pression, ainsi qu'un deuxième côté exposé à une deuxième pression, de sorte que des variations dans une différence de pression entre la première pression et la deuxième pression induisent une déflexion de la membrane (105), modifiant ainsi la position de l'élément de soupape sensible à la pression (104) par rapport au siège de soupape (103) ; et
- un élément de sollicitation (106) configuré pour solliciter l'élément de soupape sensible à la pression (104) dans une direction à distance du siège de soupape (103) ; et
- un élément d'insertion (200) reliant entre eux le siège de soupape (103) et l'élément de sollicitation (106), contribuant ainsi à une sollicitation de l'élément de sollicitation (106), l'élément d'insertion (200) étant disposé au moins partiellement dans un trajet d'écoulement à travers la soupape à régulation de pression (100), de manière à éloigner l'élément de sollicitation (106) du trajet d'écoulement, et l'élément d'insertion (200) étant pourvu d'une ou de plusieurs ouvertures (201, 206), l'élément d'insertion (200) étant ainsi configuré pour permettre à un écoulement de fluide de traverser l'élément d'insertion (200),
**caractérisée en ce que** la partie de l'élément d'insertion (200) butant contre l'élément de sollicitation (106) est fermée, empêchant ainsi l'écoulement de fluide de passer vers l'élément de sollicitation (106), et **en ce que** la partie de l'élément d'insertion (200) butant contre l'élément de sollicitation (106) est formée de manière à ce que l'élément de sollicitation (106) l'entoure.

2. Soupape à régulation de pression (100) selon la revendication 1, dans laquelle une ou plusieurs parmi les une ou plusieurs ouvertures (201, 206) de l'élément d'insertion (200) est/sont disposée(s) au niveau d'une partie de l'élément d'insertion (200) butant contre le siège de soupape (103) et sur le côté de l'élément d'insertion (200).

3. Soupape à régulation de pression (100) selon l'une quelconque des revendications précédentes, dans laquelle l'élément d'insertion (200) est remplaçable, de manière à permettre l'introduction d'un nouvel élément d'insertion (200).

4. Soupape à régulation de pression (100) selon l'une quelconque des revendications précédentes, dans laquelle une sollicitation de l'élément de sollicitation (106) est partiellement définie par une hauteur de l'élément d'insertion (200), et dans laquelle la distance entre le siège de soupape (103) et l'élément de sollicitation (106) est définie par la hauteur de l'élément d'insertion (200).

5. Soupape à régulation de pression (100) selon l'une quelconque des revendications précédentes, dans laquelle l'élément de sollicitation (106) définit une différence de pression maximale entre les première et deuxième pressions.

6. Soupape à régulation de pression (100) selon l'une quelconque des revendications précédentes, dans laquelle l'élément de sollicitation (106) est au moins un ressort.

7. Soupape à régulation de pression (100) selon l'une quelconque des revendications précédentes, dans laquelle l'élément de soupape sensible à la pression (104) est cupuliforme.

8. Soupape à régulation de pression (100) selon l'une quelconque des revendications précédentes, dans laquelle l'élément d'insertion (200) est au moins partiellement positionné à l'intérieur de l'élément de soupape sensible à la pression (104).

9. Soupape à régulation de pression (100) selon l'une quelconque des revendications précédentes, la soupape comprenant en outre une partie de régulation d'écoulement, dans laquelle la partie de régulation d'écoulement comprend
- un siège de soupape à régulation d'écoulement ;
- au moins un canal reliant l'au moins une entrée de fluide (101) et l'au moins une sortie de fluide (102) ;
- un piston, et
- un élément de soupape à régulation d'écoulement disposé de façon mobile par rapport au siège de soupape à régulation d'écoulement, la position de l'élément de soupape à régulation d'écoulement par rapport au siège de soupape à régulation d'écoulement définissant un deuxième degré d'ouverture de la partie de régulation d'écoulement de la soupape à régulation de pression (100).

10. Soupape à régulation de pression (100) selon l'une quelconque des revendications précédentes, la soupape comprenant en outre un conduit de pression (113) présentant une première (114) et une deuxième (115) extrémité, la première extrémité (114) étant en communication de pression avec l'au moins une entrée de fluide (101) ou avec l'au moins une sortie de fluide (102), et la deuxième extrémité (115) du conduit (113) étant en communication de pression avec le deuxième côté de la membrane (105).

11. Soupape à régulation de pression (100) selon la revendication 10, dans laquelle le premier côté de la membrane (105) est relié à l'au moins une sortie de fluide (102) lorsque le conduit (113) est relié à l'au moins une entrée de fluide (101), et le premier côté de la membrane (105) est relié à l'au moins une entrée de fluide (101) lorsque le conduit (113) est relié à l'au moins une sortie de fluide (102).
